# EUROPÄISCHE PATENTANMELDUNG

(11) **EP 1 248 314 A2**
(43) Veröffentlichungstag der Anmeldung: **09.10.2002**
(21) Anmeldenummer: 02007547.9
(22) Anmeldetag: 03.04.2002
(51) Int. Cl.: H01M 8/24, H01M 8/02, C25B 9/20

(54) **Elektrochemischer Zellenstapel**

(30) Priorität: 07.04.2001 DE 10117572
(71) Anmelder: DaimlerChrysler AG, 70567 Stuttgart (DE)
(72) Erfinder: Böhm, Gustav, 88662 Überlingen (DE); Sondermann, Mario, 37073 Göttingen (DE)

(57) **Zusammenfassung**

Die Erfindung betrifft einen elektrochemischen Zellenstapel umfassend abwechselnd angeordnete Membran-Elektroden-Einheiten (2) und Separatorplatten (1) mit Kanalbereichen (3) zur Zu- und Abführung für das Reaktant- oder Oxidant-Fluid an die Membran-Elektroden-Einheit (2), wobei die Separatorplatten (1) auf einer Seite eine Oberflächenstruktur aus Kanälen (5) und dazwischenliegenden Stegen (4) und auf der anderen Seite eine hierzu negative Oberflächestruktur aufweisen. Gemäß der Erfindung umfassen die Separatorplatten (1) einen Kanalbereich (3), der aus der geometrischen Mitte (M) derart versetzt ist, dass beim Stapeln der Separatorplatten (1), wobei benachbarte Separatorplatten (1) jeweils um 180° um die Flächennormale (F) gedreht zueinander angeordnet sind, die Separatorplatten (1) derart übereinanderliegen, dass von außen wirkende Kräfte bezogen auf die zwischen den Separatorplatten (1) liegende MEA (2) biegemomentfrei übertragen werden.

## Beschreibung

Die Erfindung betrifft einen elektrochemischen Zellenstapel, insbesondere einen PEM- oder DMFC-Brennstoffzellenstapel gemäß dem Oberbegriff des Patentanspruchs 1.

Elektrolysezellen sind elektrochemische Einheiten, die chemische Substanzen, wie z.B. Wasserstoff und Sauerstoff an katalytischen Oberflächen von Elektroden unter Zuführung von elektrischer Energie erzeugen. Brennstoffzellen sind elektrochemische Einheiten, die elektrische Energie mittels Umsetzung von chemischer Energie an katalytischen Oberflächen von Elektroden erzeugen.

Elektrochemische Zellen dieser Art umfassen folgenden Hauptkomponenten:
- eine Kathodenelektrode, an der durch Zugabe von Elektronen die Reduktionsreaktion stattfindet. Die Kathode umfasst mindestens eine Elektrodenträgerschicht, die als Träger für den Katalysator dient.
- eine Anodenelektrode, an der die Oxidationsreaktion durch Abgabe von Elektronen stattfindet. Die Anode besteht ebenso wie die Kathode aus mindestens einer Trägerschicht und Katalysatorschicht.
- eine Matrix, die zwischen Kathode und Anode angeordnet ist und als Träger für den Elektrolyten dient. Der Elektrolyt kann in fester oder flüssiger Phase sowie als Gel vorliegen. Vorteilhaft wird der Elektrolyt in fester Phase in eine Matrix eingebunden, so dass ein sogenannter Festelektrolyt entsteht.

Diese drei, oben aufgeführten Komponenten werden auch als Membran-Elektroden-Einheit (MEA = Membrane Elektrode Assembly) bezeichnet, wobei auf einer Seite der Matrix die Kathodenelektrode und auf der anderen Seite die Anodenelektrode aufgebracht ist.
- eine Separatorplatte, die zwischen den MEAs angeordnet ist und zur Reaktantenund Oxidantensammlung in den elektrochemischen Zellen dient.
- Dichtelemente, die sowohl eine Vermischung der Fluide in den elektrochemischen Zellen, als auch ein Austreten der Fluide aus der Zelle zur Umgebung verhindern.

Werden Elektrolysezellen oder Brennstoffzellen aufeinander gestapelt, so entsteht ein Elektrolysestapel oder Brennstoffzellenstapel, im weiteren auch als Stapel bezeichnet. Hierbei verläuft die elektrische Stromführung in einer Reihenschaltung von Zelle zu Zelle. Das Fluid-Management des Oxidanten und Reaktanten erfolgt über Sammel- und Verteilerkanäle zu den einzelnen Zellen. In elektrochemischen Zellen werden die Zellen eines Stapels z.B. parallel mittels mindestens jeweils eines Verteilerkanals für jedes Fluid mit dem Reaktant- und Oxidant-Fluid versorgt. Die Reaktionsprodukte sowie überschüssiges Reaktant- und Oxidant-Fluid werden aus den Zellen mittels mindestens jeweils eines Sammelkanals aus dem Stapel geführt.

Zur wirtschaftlichen Verwendung von Elektrolysezellen oder Brennstoffzellen für mobile Anwendungen müssen für vergleichbare Leistungsgrößen die Gestehungskosten von Verbrennungsmotoren erreicht werden. Da zum Betrieb von mobilen Systemen mit Elektromotoren Zellenstapel mit einer Vielzahl von Zellen (> 300 Stück) benötigt werden, sind geringe Stückkosten der Zellkomponenten wichtig. Die Stückkosten umfassen sowohl Material- und Herstellkosten.

Außerdem werden Brennstoffzellen mit einer dünnen Zellendicke gefordert. Dabei werden üblicherweise dünne Membran-Elektroden-Einheiten verwendet. Diese MEAs sind sehr flexibel und können ab einer bestimmten mechanischen Belastung, wie sie beim Stapeln von Separatorplatten auftreten, zerstört werden. Durch das Stapeln identischer Separatorplatten mit dazwischenliegenden MEAs tritt der Effekt auf, dass die Stege und Kanäle der Separatorplatten jeweils übereinanderliegen und somit ineinander fallen. In diesem Fall spricht man vom Eierkartoneffekt. Die dazwischenliegende MEA kann dann aufgrund ihrer Flexibilität beschädigt oder zerstört werden. Außerdem wird die Durchströmung des Kanals behindert oder unterbunden. Das Problem des Eierkartoneffekts tritt insbesondere beim Verpressen der gestapelten Separatorplatten auf. Durch das Verpressen der Platten wird einerseits ein verbesserter elektrischer Kontakt zwischen den Platten erzeugt und andererseits eine Abdichtung der Platten erreicht.

In der nicht vorveröffentlichen DE 100 47 248 wird der Eierkartoneffekt dadurch verhindert, dass zwei verschiedene Separatorplatten verwendet werden, zwischen denen die MEA angeordnet ist. Die Separatorplatten sind dabei derart ausgestaltet, dass beim Stapeln ein Kanal der einen Platte über einem Steg der anderen Platte liegt. Dadurch erfolgt eine Abstützung benachbarter Separatorplatten, wodurch eine Zerstörung der MEA verhindert wird. Ein Nachteil dabei ist, dass die Gestehungskosten des Zellenstapels aufgrund der Herstellung zweier verschiedener Separatorplatten ansteigt.

In US 6,040,076 wird ein Brennstoffzellenstapel offenbart, der durch die Stapelung identischer Separatorplatten gebildet wird, d.h. es werden lediglich Separatorplatten eines Typs verwendet. Diese Separatorplatten weisen durch Prägen einer ebenen Platte auf einer Seite eine Oberflächenstruktur zur Verteilung des Oxidanten und auf der anderen Seite eine hierzu negative Oberflächenstruktur zur Verteilung des Reaktanten auf. Beim Stapeln der Separatorplatten ist die MEA zwischen den Separatorplatten angeordnet, wobei die MEA eine mechanisch stabile Einheit darstellt. Aufgrund dieses sehr stabilen Aufbaus der MEA kann sich der sogenannte Eierkartoneffekt nicht auswirken. Nachteilig ist jedoch die hohe Zelldicke der Brennstoffzellen, aufgrund der relativ großen Dicke der MEAs.

MEAs auf Basis von Polymer-Elektrolyt-Membranen (PEM) sind dagegen sehr dünn und flexibel. Der derzeitige Entwicklungsstand zeigt, dass MEAs von noch geringerer Dicke, in einer Größenordnung von weniger als 0,5 mm, gefordert werden.

Aufgabe der Erfindung ist es, einen Brennstoffzellenstapel zu schaffen, der aus identischen Separatorplatten aufgebaut ist, wobei bei Verwendung von dünnen MEAs eine Zerstörung der MEAs aufgrund des Eierkartoneffekts vermieden wird.

Diese Aufgabe wird durch den Gegenstand des Patentanspruchs 1 gelöst. Vorteilhafte Ausführungen der Erfindung sind Gegenstand von Unteransprüchen.

Die Separatorplatten umfassen erfindungsgemäß einen Kanalbereich, der aus der geometrischen Mitte derart versetzt ist, dass beim Stapeln der Separatorplatten, wobei benachbarte Separatorplatten jeweils um 180° um die Flächennormale gedreht zueinander angeordnet sind, die Separatorplatten derart übereinanderliegen, dass von außen wirkende Kräfte bezogen auf die zwischen den Separatorplatten liegende MEA biegemomentfrei übertragen werden.

Die Separatorplatten weisen somit keinen zentral ausgeführten Kanalbereich, sondern einen bezüglich der geometrischen Mitte asymmetrisch angeordneten Kanalbereich auf. Werden nun eine erfindungsgemäße Separatorplatte und eine um 180° um die Plattennormale gedrehte Separatorplatte übereinander angeordnet, so fallen diese nicht ineinander, sondern stützen sich gegenseitig ab, wodurch ein Beschädigen der dazwischenliegenden MEA aufgrund des Eierkartoneffekts oder aufgrund von starken Scherbelastungen der MEA verhindert wird. Außerdem werden Funktionsstörungen aufgrund von Kanaleinengungen durch Auslenkungen der MEA vermieden. Diese Abstützung oder direkte Abstützung erfolgt dabei derart, dass beim Stapeln der Platten die Kanäle der einen Platte und die Stege der benachbarten Platte übereinanderliegen. Dadurch wird gewährleistet, dass eine Zerstörung der MEA oder eine Behinderung der Fluidströmung beim Stapeln der Separatorplatten verhindert wird.

Hierbei sei angemerkt, dass je nach Betrachtungsweise der Separatorplatte eine Auslenkung in der Platte als Kanal oder als Steg betrachtet werden kann. Im folgenden werden als Kanal die negativen Auslenkungen und als Steg die positive Auslenkungen aus der Oberseite der Separatorplatte bezeichnet. Ein Übereinanderliegen von Kanälen der einen Platte und Stegen der anderen Platte bedeutet somit, dass sich diese Platten gegenseitig abstützen, was ein Ineinanderfallen der Platten verhindert.

Ein Vorteil der Erfindung ist, dass für die Herstellung des Brennstoffzellenstapels lediglich identische Separatorplatten verwendet werden, wodurch die Herstellungskosten gesenkt werden können. Ein weiterer Vorteil ist, dass die weiteren Bestandteile der Separatorplatten unverändert bleiben, z.B. die Durchbrechungen für die Ports, welche der Zu- und Abführung des Reaktant- und Oxidant-Fluids der Separatorplatte dienen, die Verteilerbereiche zur Beeinflussung der Fluidverteilung von den Portbereichen zu dem Kanalbereich sowie Dichtbereiche.

In einer vorteilhaften Ausführung der Erfindung ist der Kanalbereich senkrecht zu mindestens einer Kanalrichtung versetzt, wobei die Strecke um die der Kanalbereich versetzt ist, dem halben Abstand von Kanalmitte zu Stegmitte oder einem ganzzahligen Vielfachen davon entspricht. Somit liegen mittels der erfindungsgemäßen Anordnung der Separatorplatten die Stege der einen Platte und die Kanäle der benachbarten Platte übereinander. Dadurch wird ein Beschädigen der MEA verhindert. Selbstverständlich ist es auch möglich, die Strecke des Versatzes des Kanalbereichs derart zu wählen, dass beim Stapeln der Separatorplatten die Stege der einen Platte und die Kanäle der benachbarten Platte gerade noch übereinander liegen.

Ein beispielhafter Kanalbereich mit einer parallelen Kanalstruktur weist Kanäle mit ausschließlich einer Richtung auf. Der Kanalbereich ist in der erfindungsgemäßen Separatorplatte um eine entsprechende Strecke senkrecht zu dieser Richtung versetzt. Bei einem Kanalbereich mit einer mäanderförmigen Kanalstruktur sind hingegen mindestens zwei Kanalrichtungen vorhanden, das bedeutet, die Kanäle weisen Umlenkungen auf. In diesem Fall ist der Kanalbereich der erfindungsgemäßen Separatorplatte senkrecht zu jeder Kanalrichtung um eine entsprechende Strecke versetzt. Diese Strecke beträgt bevorzugt gerade dem halben Abstand von Kanalmitte zu Stegmitte oder einem ganzzahligen Vielfachen davon.

In einer weiteren bevorzugten Ausführung der Erfindung weisen die Kanäle und die Stege des Kanalbereichs unterschiedliche Querschnitte auf. Dadurch wird erreicht, dass das Reaktant-Fluid, welches auf der einen Seite der Separatorplatte fließt, sowie das auf der anderen Seite fließende Oxiant-Fluid optimal dimensioniert werden kann, um eine optimale Leistung der elektrochemischen Zelle zu erhalten. Diese Dimensionierung ist nötig, da für das Reaktant- und das Oxidant-Fluid unterschiedliche Volumenströme benötigt werden.

Mittels dem erfindungsgemäßen Brennstoffzellenstapel wird somit erreicht, dass bei beliebiger Oberflächenstruktur des Kanalbereichs eine Abstützung benachbarter Separatorplatten erreicht wird, so dass die dazwischenliegenden MEAs nicht zerstört werden. Außerdem wird erreicht, dass durch die erfindungsgemäße Stapelung der Separatorplatten die strömungstechnischen Verhältnisse des Reaktant- und Oxidant-Fluids in jeder Zelle gleich sind, wodurch eine gleichmäßige Zellenleistung im Stapel gewährleistet ist.

Die Erfindung sowie weitere vorteilhafte Ausführungen der Erfindungen werden anhand von Zeichnungen näher erläutert. Es zeigen:
- Fig. 1: einen Brennstoffzellenstapel mit identischen Separatorplatten gemäß dem Stand der Technik in Schnittdarstellung,
- Fig. 2: einen weiteren Brennstoffzellenstapel mit zwei verschiedenen Separatorplatten gemäß dem Stand der Technik in Schnittdarstellung
- Fig. 3: einen erfindungsgemäßen Brennstoffzellenstapel mit identischen Separatorplatten mit einem aus der geometrischen Mitte versetzten Kanalbereich.

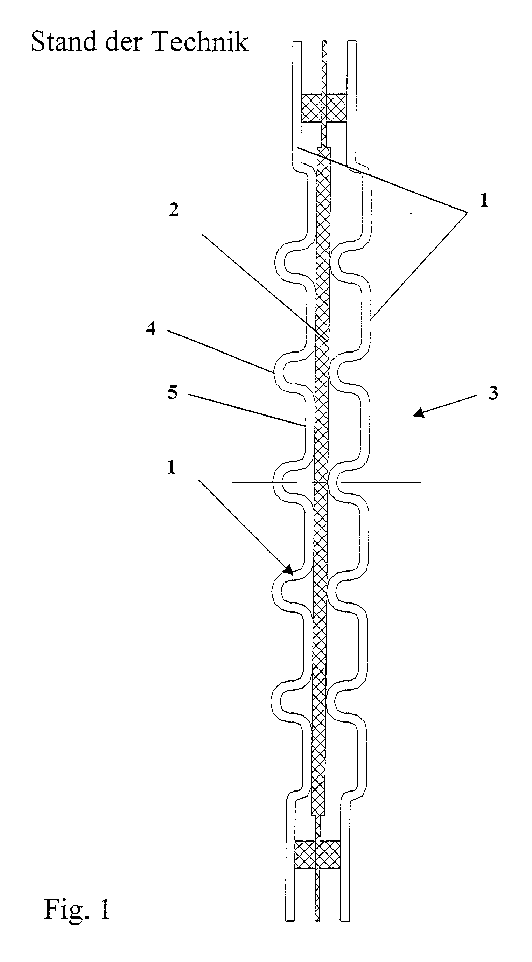

Fig. 1 zeigt in Schnittdarstellung einen Brennstoffzellenstapel mit identischen Separatorplatten gemäß dem Stand der Technik. Zwischen den beiden identischen Separatorplatten 1 ist eine MEA 2 angeordnet. Die Separatorplatte 1 umfasst dabei einen Kanalbereich 3 mit Stegen 4 und Kanälen 5. Im Brennstoffzellenstapel liegen die gestapelten Separatorplatten 1 derart übereinander, dass die Stege 4 und die Kanäle 5 der Separatorplatten 1 jeweils übereinander liegen und somit ineinander fallen. Die dazwischenliegende MEA wird somit einer hohen Scherbelastung ausgesetzt. Außerdem kommt es aufgrund der Auslenkung der MEA zu einer Verengung des Kanalquerschnitts.

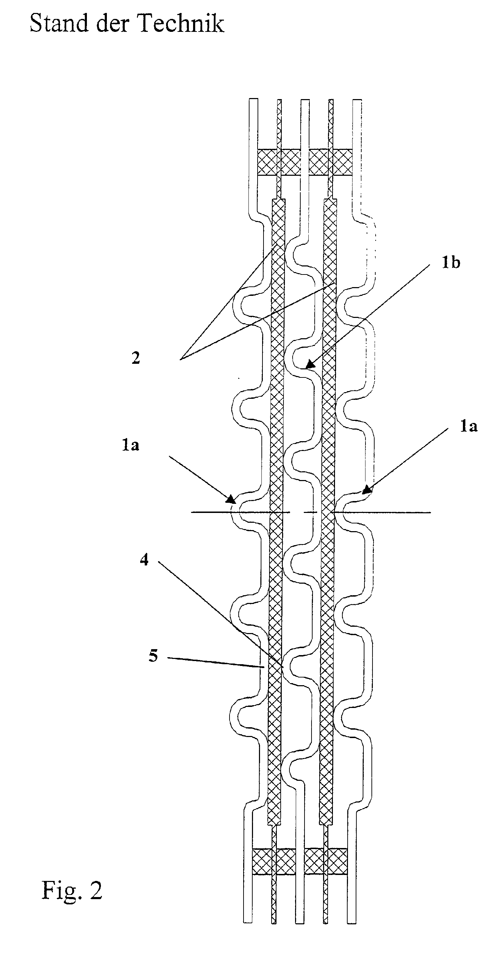

In Fig. 2 ist ein weiterer Brennstoffzellenstapel gemäß dem Stand der Technik dargestellt. Hierbei sind zwei verschiedene Separatorplatten 1a, 1b verwendet. Die Separatorplatten 1a, 1b sind dabei derart ausgestaltet, dass beim Stapeln ein Kanal 5 der Platte 1b und ein Steg 4 der benachbarten Platte 1a übereinanderliegt. Dadurch wird die dazwischenliegende MEA 2 kraftschlüssig belastet. Es treten in der MEA 2 keine Biegemomente auf, wodurch eine Beschädigung verhindert wird.

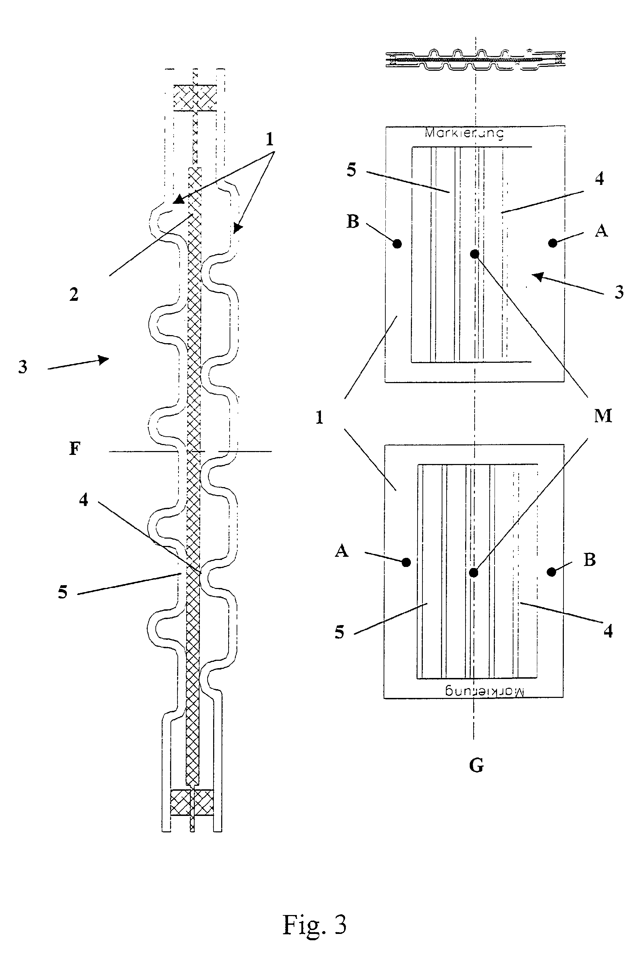

Fig. 3 zeigt in der linken Darstellung einen erfindungsgemäßen Brennstoffzellenstapel mit identischen Separatorplatten in Seitenansicht. Vorteilhaft umfasst der Kanalbereich 3 der Separatorplatten 1 eine identische Zahl von Stegen 4 und Kanälen 5. Die beiden benachbarten Separatorplatten 1 sind identisch und um 180° um die Flächennormale F der Separatorplatte 1 gedreht zueinander angeordnet. Außerdem ist der Kanalbereich 3 der Separatorplatten 1 aus der geometrischen Mitte M versetzt (rechte Darstellungen). Die übereinander, mit einer dazwischen liegenden MEA 2 angeordneten Separatorplatten 1 stützten sich dabei gegenseitig ab, wobei ein Kanal 5 der einen Platte 1 und ein Steg 4 der benachbarten Platte 1 übereinanderliegen. Nicht dargestellt sind die Durchbrechungen für die Ports zur Zu- und Abführung der Fluide sowie die Verteilerbereiche zur Verteilung der Fluide in den Kanalbereich.

In der rechten oberen Darstellung in Fig. 3 ist eine beispielhafte Separatorplatte mit einer parallelen Kanalstruktur in Draufsicht dargestellt. Die obere Darstellung zeigt eine Separatorplatte 1 mit einem Kanalbereich 3, welcher aus der geometrischen Mitte M der Platte 1 versetzt ist. Der Versatz ist dabei in eine Richtung senkrecht zur Kanalrichtung ausgeführt, wobei die Länge des Versatzes dem halben Abstand zwischen Kanalmitte und Stegmitte entspricht. Daraus resultiert, dass der rechte Rand A und der linke Rand B der Separatorplatte 1 eine unterschiedliche Breite aufweisen.

Die rechte untere Darstellung zeigt die gleiche Separatorplatte 1 um 180° um die Flächennormale F gedreht. Hierbei entspricht in der Separatorplatte 1 nun der linke Rand B der unteren Darstellung dem rechten Rand A aus der oberen Darstellung, sowie der rechte Rand A der unteren Darstellung dem linken Rand B der oberen Darstellung. Die gestrichelte Linie G zeigt den auf die Oberfläche der Separatorplatte 1 projizierte geometrische Mitte M. Aus den beiden Darstellung lässt sich erkennen, dass durch Drehung der Separatorplatte 1 (untere Darstellung) die Kanäle 5 und die Stege 4 der gestapelten Separatorplatten nicht übereinanderliegen und somit die gestapelten Platten nicht ineinander fallen.

## Patentansprüche

1. Elektrochemischer Zellenstapel umfassend abwechselnd angeordnete Membran-Elektroden-Einheiten und Separatorplatten mit Kanalbereichen zur Zu- und Abführung für das Reaktant- oder Oxidant-Fluid an die Membran-Elektroden-Einheit, wobei die Separatorplatten auf einer Seite eine Oberflächenstruktur aus Kanälen und dazwischenliegenden Stegen und auf der anderen Seite eine hierzu negative Oberflächenstruktur aufweisen, **dadurch gekennzeichnet, dass** die Separatorplatten (1) einen Kanalbereich (3) umfassen, der aus der geometrischen Mitte (M) derart versetzt ist, dass beim Stapeln der Separatorplatten (1), wobei benachbarte Separatorplatten (1) jeweils um 180° um die Flächennormale (F) gedreht zueinander angeordnet sind, die Separatorplatten (1) derart übereinanderliegen, dass von außen wirkende Kräfte bezogen auf die zwischen den Separatorplatten (1) liegende MEA (2) biegemomentfrei übertragen werden.

2. Zellenstapel nach Anspruch 1, **dadurch gekennzeichnet, dass** der Kanalbereich (3) senkrecht zu mindestens einer Kanalrichtung versetzt ist, wobei die Strecke um die der Kanalbereich (3) versetzt ist, dem halben Abstand von Kanalmitte zu Stegmitte oder einem ganzzahligen Vielfachen davon entspricht.

3. Zellenstapel nach einem der vorangehenden Ansprüche, **dadurch gekennzeichnet, dass** der Kanalbereich (3) eine gleiche Zahl von Kanälen (5) und Stegen (4) aufweist.

4. Zellenstapel nach einem der vorangehenden Ansprüche, **dadurch gekennzeichnet, dass** der Querschnitt der Kanäle (5) und der Querschnitt der Stege (4) unterschiedlich ist.
